# EUROPEAN PATENT APPLICATION

(11) **EP 3 522 033 A1**
(43) Date of publication of application: **07.08.2019**
(21) Application number: 18020049.5
(22) Date of filing: 03.02.2018
(51) Int. Cl.: G06F 16/957

(54) **WEB-BROWSER EXTENSION FOR PROVIDING COMPARATIVE DATA ON GOODS AND SERVICES WHILE BROWSING THE INTERNET, AND THE METHOD OF ITS IMPLEMENTATION**

(71) Applicant: IAI S.A., 71-064 Szczecin (PL)
(72) Inventor:

(57) **Abstract**

This invention is a web-browser extension for comparing data on goods and services while browsing the Internet. More specifically, this is a web-browser extension that provides the user with suggestions and comparative data while browsing the Internet. The presented web-browser extension can be used to compare various data about items on a website and to inject content from other websites containing similar content.

## Description

### BACKGROUND OF THE INVENTION

### Field of the Invention

This invention is a web-browser extension for comparing data on goods and services while browsing the Internet. This document describes the extension and the method of its implementation. More specifically, this is a web-browser extension that provides the user with suggestions and comparative data while browsing the Internet.

### Description of Prior Art

There are various website tools that support users in finding the most favourable price for goods and services displayed on a website. For example, the solution provided by the Picodi.com S.A. company takes the form of a browser plug-in displaying discount codes and promotions for the items being viewed. However, it does this as a separate alert within the browser - the user is therefore forced to check for these alerts by clicking the Picodi alert icon located in a side tray or in the browser's menu bar. Other, similar extensions function in a similar way, i.e. requiring additional action by the user. This is inconvenient, particularly in a time of Internet information overload and the more complex mechanisms of browser add-ons. To look at it another way, web-browsers currently only display web content provided from their own, web-based sources. It is impossible to find comparative information about goods and services on a website, i.e. whether they are available from other sources at better prices.

### SUMMARY OF THE INVENTION

The presented web-browser extension can be used to compare various data about items on a website and to inject content from other websites containing similar content.

Accordingly, the primary task of the present invention is to function as a web-browser extension for suggesting similar items, including but not limited to goods and services, to those displayed on the current web-page. Upon being installed as an extension to a web-browser and/or activated as a native web-browser function, the extension analyses content on the website even without user indication of anything specific, including desired, potentially searched-for items, and compares it to patterns stored on a browser extension service server. These patterns can include, amongst other things, names, European Article Number codes, product and/or service descriptions that match the products and/or services between each other. Once the browser extension matches items on the currently-viewed website with the stored patterns, the pattern information is sent via a software component back to the service server, from which information on similar goods/services offered by other producers/sellers are searched for and selected by an algorithm/module operating on the extension's service server. This information is then transferred back to the currently-viewed website in the form of files or a portion of website code to be injected by a data processing apparatus (being part of the web-browser extension) onto the currently-viewed website, in an integrated way. Injected files or web-page source code are selected by an algorithm/module operating on the extension's service server, which checks which of this information best matches the content displayed on the currently-viewed web page. This algorithm/module also takes into consideration which web-browser is being used, as the modification code is adapted specifically to each type of browser (Chrome, IE, Firefox etc). Modification patterns can be based on a machine learning component, and not only on a machine comparison component.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF THE DRAWINGS

The features of the invention believed to be novel are set forth with particularity in the appended claims. The invention itself, however, can be best understood with reference to the following detailed descriptions of the exemplary embodiment of the invention, taken in conjunction with the accompanying drawings, in which:

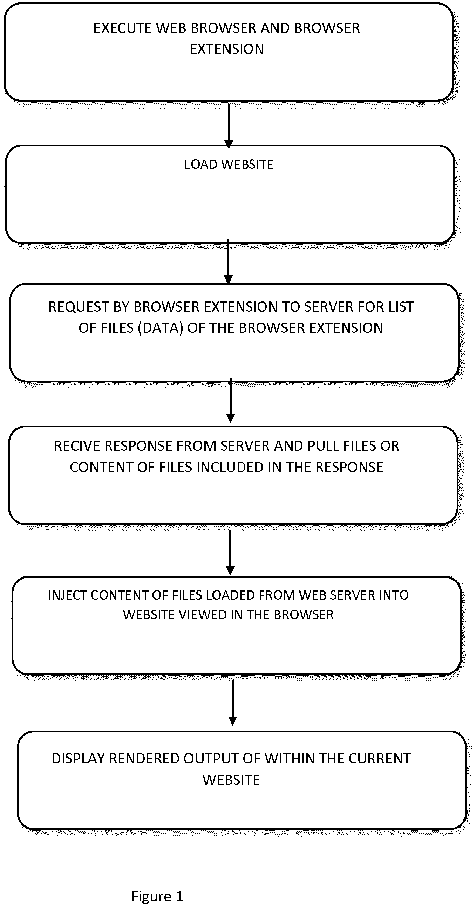

Figure 1 shows the environment of the web-browser extension for making commercial item comparisons while browsing and the method of its implementation.

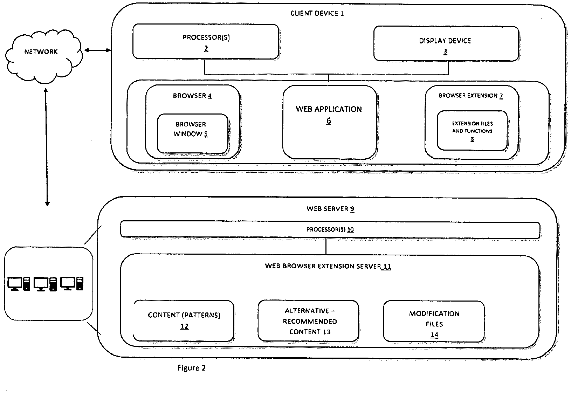

Figure 2 illustrates the process of the web-browser extension for making commercial item comparisons while browsing and the method of its implementation.

### DETAILED DESCRIPTION OF THE INVENTION

The present disclosure comprises examples of data processing facilitated by a web-browser extension. A web-browser extension is a collection of processing operations that collectively extend the functionality of a web-browser. Web-browser extensions can consist of one or more executable programs, application programming interfaces (APIs), or any other collection of processing operations, functions, routines, protocols, and tools for building and executing software applications on a processing device. A web-browser application is an application that enables retrieving, presenting, and traversing information resources over the Internet (or a distributed network).

The extension described herein provides the following functionality: presentation of suggestions for other goods/services while browsing the Internet; analysis of content on a website being viewed without specific user indication of any goods/services on the currently-viewed web page; comparison of goods/services identified on the currently-viewed website with data patterns stored on a web-browser extension service server; matching of identified items on the currently-viewed website with these data patterns; sending of the pattern data via a software component to another web-browser extension service server, from which information on similar goods/items offered by other producers/sellers is selected by an algorithm/module, and the transfer back of other item suggestions in the form of files or portions of website code to be injected by a data processing apparatus (being part of the web-browser extension) onto the analysed website, in an integrated way, thus displaying within the currently-viewed website the comparative data retrieved from the extension service server.

Accordingly, the present disclosure provides a plurality of technical advantages, including but not limited to, a more convenient and automated way of providing Internet users with information on other producers' and/or sellers' goods and services.

In conjunction with the attached drawings, the technical content and detailed description of the present invention are described thereinafter according to a preferable embodiment, selected so as not to limit the range of its application. Any equivalent variants and modifications made according to the appended claims are all covered by the claims made by the present invention.

## Claims

1. A computer-based method of providing, via a web-browser extension, comparative data on goods and services while browsing the Internet, and the method of its implementation, which happens through:
• Analysis of content on a website being viewed without specific user indication of any goods/services on the currently-viewed web page;
• Comparison of goods/services identified on the currently-viewed website with data patterns stored on a web-browser extension service server;
• Matching of identified items on the currently-viewed website with these data patterns;
• Sending of the pattern data via a software component to another web-browser extension service server, from which information on similar goods/items offered by other producers/sellers is selected by an algorithm/module;
• Transfer back of other item suggestions in the form of files or portions of website code to be injected by a data processing apparatus (being part of the web-browser extension) onto the analysed website, in an integrated way;
• Display within the currently-viewed website the comparative data retrieved from the extension service server;
• Determination, at the end of the process, of updated data to be stored in the patterns database based on the results, in order to improve subsequent requests.

2. A system consisting of at least one CPU and RAM operatively connected with each other, wherein the memory stores the computer-executable instructions that cause the processor to perform the following actions - providing, via a web-browser extension, comparative data on goods and services while browsing the Internet, and the method of its implementation, which happens through:
• Analysis of content on a website being viewed without specific user indication of any goods/services on the currently-viewed web page;
• Comparison of goods/services identified on the currently-viewed website with data patterns stored on a web-browser extension service server;
• Matching of identified items on the currently-viewed website with these data patterns;
• Sending of the pattern data via a software component to another web-browser extension service server, from which information on similar goods/items offered by other producers/sellers is selected by an algorithm/module;
• Transfer back of other item suggestions in the form of files or portions of website code to be injected by a data processing apparatus (being part of the web-browser extension) onto the analysed website, in an integrated way;
• Display within the currently-viewed website the comparative data retrieved from the extension service server;
• Determination, at the end of the process, of updated data to be stored in the patterns database based on the results, in order to improve subsequent requests.
